(19) Europäisches Patentamt
European Patent Office
Office européen des brevets

(11) **EP 4 366 259 A1**

(12) **EUROPEAN PATENT APPLICATION**
published in accordance with Art. 153(4) EPC

(43) Date of publication:
**08.05.2024 Bulletin 2024/19**

(21) Application number: **22910059.9**

(22) Date of filing: **21.12.2022**

(51) International Patent Classification (IPC):
**H04L 41/06** *(2022.01)*

(52) Cooperative Patent Classification (CPC):
**H04L 41/06; H04L 41/0604; H04L 41/0631;
H04L 67/55**

(86) International application number:
**PCT/CN2022/140604**

(87) International publication number:
**WO 2023/116747 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021 CN 202111584481**

(71) Applicant: **Huawei Technologies Co., Ltd.
Longgang
Shenzhen, Guangdong 518129 (CN)**

(72) Inventors:
• **CHEN, Jiabao
Shenzhen, Guangdong 518129 (CN)**
• **MAI, Caijian
Shenzhen, Guangdong 518129 (CN)**
• **LIU, Mingrui
Shenzhen, Guangdong 518129 (CN)**

(74) Representative: **Maiwald GmbH
Engineering
Elisenhof
Elisenstrasse 3
80335 München (DE)**

(54) **MESSAGE NOTIFICATION METHOD AND RELATED APPARATUS**

(57) Embodiments of this application provide a message notification method and a related apparatus. A same topic message is dynamically filtered by inferring a user role, and appropriate content is sent to different users. Therefore, a plurality of types of templates do not need to be provided for the different users in a case of the same topic message, so that a user subscription error is reduced, and a message buffer size is also reduced. The message notification method is mainly applied to a message notification apparatus. The message notification apparatus receives a first topic message. Then, the message notification apparatus tailors the first topic message based on a user feature and according to a notification rule to obtain a first notification message. The user feature is a user feature of a first user that subscribes to the first topic message, and the notification rule indicates a correspondence between the user feature and a notification message. Finally, the message notification apparatus sends the first notification message to a first terminal device corresponding to the first user.

FIG. 5

**Description**

This application claims priority to Chinese Patent Application No. 202111584481.1, filed with the China National Intellectual Property Administration on December 22, 2021 and entitled "MESSAGE NOTIFICATION METHOD AND RELATED APPARATUS", which is incorporated herein by reference in its entirety.

**TECHNICAL FIELD**

This application relates to the communication field, and in particular, to a message notification method and a related apparatus.

**BACKGROUND**

In the telecommunication field, an element management system (element management system, EMS) or a network management system (network management system, NMS) is a system used to manage and control a network, and is widely used. Events such as an abnormal state of a network and a service, a troubleshooting state, and execution and a change of an automatically executed task need to be notified to corresponding engineers in time. In this case, the foregoing requirements may be implemented by using a notification function of a network management and control system. However, in the EMS/NMS, different roles have different perceptions of a same service. Therefore, the different roles need to receive different notification content or need to be notified in different manners. For example, a notification of fault handling timeout needs to be simultaneously sent to a frontline personnel, a maintenance team leader, and a region maintenance representative. Typical content of the notification of fault timeout is: <fault sequence number>, <fault type>, <fault details>, <faulty network element>, <fault root cause>, <fault region>, <importance>, <fault duration>, and <warning type>. The frontline personnel need to be reminded to handle a fault as soon as possible, and fault details and detailed content need to be provided. However, <fault region> does not need to be presented, and a corresponding link does not need to be provided. The frontline maintenance team leader mainly needs to remind a team member to handle the fault as soon as possible, and only needs to provide <fault details>, <faulty network element>, and <fault duration>. The region maintenance is responsible for notifying a fault and does not need to provide details. Meaningful fields are <fault type>, <faulty network element>, <importance>, and <fault duration>. A notification message may not need to be sent to another personnel.

Currently, a notification center of the EMS/NMS uses a publish/subscribe mode. First, a user subscribes to a corresponding message topic and determines message content, a sending condition, and a sending manner of a corresponding notification message. Then, after the notification message is generated, the notification center sends the notification message to a subscriber.

In this solution, for a same message topic, if message content received by different persons needs to be different, different content templates need to be subscribed to. A sender independently generates different messages, and sends a plurality of messages. Consequently, more message queues are occupied. In addition, subscription needs to be performed once for each of different roles. Consequently, subscription takes more time, and the subscribed template is prone to an error.

**SUMMARY**

Embodiments of this application provide a message notification method and a related apparatus. A same topic message is dynamically filtered by inferring a user role, and appropriate content is sent to different users. Therefore, a plurality of types of templates do not need to be provided for the different users in a case of the same topic message, so that a user subscription error is reduced, and a message buffer size is also reduced.

According to a first aspect, this application provides a message notification method, mainly applied to a message notification apparatus. The message notification apparatus receives a first topic message. Then, the message notification apparatus tailors the first topic message based on a user feature and according to a notification rule to obtain a first notification message. The user feature is a user feature of a first user that subscribes to the first topic message, and the notification rule indicates a correspondence between the user feature and a notification message. Finally, the message notification apparatus sends the first notification message to a first terminal device corresponding to the first user.

In this technical solution, before receiving the first topic message, the message notification apparatus may further obtain registration information of each topic message or subscription information of each user for the topic message.

It may be understood that the topic message is a definition of messages of various service statuses in network management. For example, in network operation and maintenance, "fault handling timeout" or a "major fault" may be used as a topic message for registration. The topic message of "fault handling timeout" is used as an example for description. The topic message includes the following content: <fault sequence number>, <fault type>, <fault details>, <current state>, <faulty network element>, <fault root cause>, <fault region>, <importance>, <fault duration>, and <warning type>.

In this technical solution, the message notification apparatus tailors the first topic message based on the user feature and according to the notification rule to generate the corresponding notification message. In this way, the topic message needs to be generated only once, and a plurality of notification messages can be generated. Therefore, a same topic message is dynamically filtered, and appropriate content is sent to different users. A plurality of types of templates do not need to be provided for the different users in a case of the same topic message, so that a user subscription error is reduced, and a message buffer size is also reduced.

Optionally, the user feature includes a user role label of the first user and a region in which the first user is located. The user role label of the first user may indicate a task that needs to be executed by the first user in a network management system. For example, if the user role label of the first user is a "region maintenance representative", the first user only needs to know that a fault exists. If the user role label of the first user is a "frontline maintenance personnel", the first user needs to handle the fault as soon as possible based on fault details, a fault cause, and a faulty network element. If the user role label of the first user is a "frontline maintenance team leader", the first user needs to learn of a fault situation and remind a team member (namely, the frontline maintenance personnel) of the first user to handle the fault as soon as possible. If the user role label of the first user is "another personnel", the first user does not need to know fault information. The region in which the first user is located indicates a region in which the first user is located in the network management system. For example, the first user is located in Guangzhou, or the first user is located in Shenzhen.

Optionally, the following solution may be used by the message notification apparatus to tailor the first topic message based on the user feature and according to the notification rule to obtain the first notification message.

The message notification apparatus obtains the user role label of the first user and the region in which the first user is located; matches the notification rule with the user role label of the first user and the region in which the first user is located to obtain a notification message template corresponding to the first user; and tailors the first topic message based on the notification message template to obtain the first notification message.

Optionally, the message notification apparatus may obtain the user feature of the first user by using the following technical manner. The manner specifically includes: The message notification apparatus obtains user data, where the user data includes user historical data of each user on the network management system. The historical data includes a user attribute, user permission, a region in which the user is located, and feedback information of the user for the notification message. The message notification apparatus generates a user model based on the user data, where the user model is configured to output the user feature of the user based on identification. The message notification apparatus outputs the user feature of the first user based on the user model. In this way, the message notification apparatus determines the user feature of the user based on the historical data of each user, and determines a notification template corresponding to the notification message of the user, so that the topic message is tailored based on the notification template.

Optionally, after obtaining the user feature of the first user, the message notification apparatus may further recommend a subscription template of a topic message to the first user based on the user feature of the first user. The subscription template includes a corresponding parameter of the topic message. This may help the user subscribe to the topic message.

Optionally, after pushing the first notification message, the message notification apparatus may further receive feedback information fed back by the first terminal corresponding to the first user. The feedback information includes a click and browse record of the first user on the first notification message. Then, the message notification apparatus updates the user model based on the feedback information. In this way, the notification message can be tailored more accurately, so that the notification message received by the first user is more accurate.

According to a second aspect, this application provides a message notification apparatus. The apparatus has a function of implementing a behavior of the message notification apparatus in the first aspect. This function may be implemented by hardware, or may be implemented by hardware executing corresponding software. The hardware or software includes one or more modules corresponding to the foregoing functions.

In a possible implementation, the apparatus includes a unit or a module configured to perform the steps in the first aspect. For example, the apparatus includes: a receiving module, configured to receive a first topic message;

a processing module, configured to tailor the first topic message based on a user feature and according to a notification rule to obtain a first notification message, where the user feature is a user feature of a first user that subscribes to the first topic message, and the notification rule indicates a correspondence between the user feature and a notification message; and

a sending module, configured to send the first notification message to a first terminal device corresponding to the first user. Optionally, the apparatus further includes a storage module, configured to store program instructions and data that are necessary for the message notification apparatus.

In a possible implementation, the apparatus includes a processor and a transceiver. The processor is configured to support the message notification apparatus in performing the corresponding function in the method provided in the first aspect. The transceiver is configured to: indicate the message notification apparatus to communicate with the first terminal device, and send the first notification message in the foregoing method to the first terminal device. Optionally, the apparatus may further include a memory. The memory is configured to be coupled to the processor, and stores the program instructions and the data that are necessary for the message notification apparatus.

In a possible implementation, when the apparatus is a chip in the message notification apparatus, the chip includes a processing module and a transceiver module. The transceiver module may be, for example, an input/output interface, a pin, or a circuit on the chip, and transmits the first topic message to another chip or module coupled to the chip. The processing module may be, for example, a processor. The processor is configured to tailor the first topic message based on the user feature and according to the notification rule to obtain the first notification message. The user feature is the user feature of the first user that subscribes to the first topic message, and the notification rule indicates the correspondence between the user feature and a notification message. The transceiver module may be, for example, an input/output interface, a pin, or a circuit on the chip, and transmits the first notification message to another device. The processing module may execute computer-executable instructions stored in a storage unit, to support the message notification apparatus in performing the method provided in the first aspect. Optionally, the storage unit may be a storage unit in the chip, for example, a register or a buffer. The storage unit may alternatively be a storage unit located outside the chip, for example, a read-only memory (read-only memory, ROM) or another type of static storage device that can store static information and instructions, or a random access memory (random access memory, RAM).

In a possible implementation, the apparatus includes a communication interface and a logic circuit. The communication interface is configured to receive the first topic message. The logic circuit is configured to tailor the first topic message based on the user feature and according to the notification rule to obtain the first notification message. The user feature is the user feature of the first user that subscribes to the first topic message, and the notification rule indicates the correspondence between the user feature and a notification message. The communication interface is further configured to send the first notification message to the first terminal device corresponding to the first user.

The processor mentioned anywhere above may be a general-purpose central processing unit (Central Processing Unit, CPU), a microprocessor, an application-specific integrated circuit (application-specific integrated circuit, ASIC), or one or more integrated circuits configured to control program execution of the data transmission method in the foregoing aspect.

According to a third aspect, an embodiment of this application provides a computer-readable storage medium. The computer storage medium stores computer instructions, and the computer instructions are used to perform the method in any one of the possible implementations of the foregoing aspects.

According to a fourth aspect, an embodiment of this application provides a computer program product including instructions. When the computer program product runs on a computer, the computer is enabled to perform the method in any one of the foregoing aspects.

According to a fifth aspect, this application provides a chip system. The chip system includes a processor, configured to support a message notification apparatus in implementing functions in the foregoing aspects, for example, generating or processing data and/or information in the foregoing methods. In a possible design, the chip system further includes a memory. The memory is configured to store program instructions and data that are necessary for the message notification apparatus, to implement functions in any one of the foregoing aspects. The chip system may include a chip, or may include a chip and another discrete component.

According to a sixth aspect, an embodiment of this application provides a network management system. The system includes the message notification apparatus in the foregoing aspect.

## BRIEF DESCRIPTION OF DRAWINGS

FIG. 1 is a schematic flowchart of message notifying;
FIG. 2 is another schematic flowchart of message notifying;
FIG. 3 is an architectural diagram of an artificial intelligence system according to an embodiment of this application;
FIG. 4 is an architectural diagram of an example system of a network management system according to an embodiment of this application;
FIG. 5 is a schematic diagram of an embodiment of a message notification method according to an embodiment of this application;
FIG. 6 is a schematic flowchart of topic message tailoring according to an embodiment of this application;

FIG. 7 is a schematic flowchart of a message notification method according to an embodiment of this application;

FIG. 8 is a schematic diagram of an embodiment of a message notification apparatus according to an embodiment of this application; and

FIG. 9 is a schematic diagram of another embodiment of a message notification apparatus according to an embodiment of this application.

## DESCRIPTION OF EMBODIMENTS

To make the objectives, technical solutions, and advantages of this application clearer and more comprehensive, the following describes embodiments of this application with reference to the accompanying drawings. It is clear that, the described embodiments are merely some rather than all of embodiments of this application. A person of ordinary skill in the art may know that, with emergence of a new application scenario, technical solutions provided in embodiments of this application are also applicable to a similar technical problem.

In the specification, claims, and the accompanying drawings of this application, the terms "first", "second", and the like are intended to distinguish between similar objects but do not necessarily indicate a specific order or sequence. It should be understood that data used in such a way is interchangeable in a proper circumstance, so that embodiments described herein can be implemented in an order other than the order illustrated or described herein. In addition, the terms "include" and "have" and any other variants are intended to cover a non-exclusive inclusion. For example, a process, method, system, product, or device that includes a series of steps or modules is not necessarily limited to those expressly listed steps or modules, but may include other steps or modules not expressly listed or inherent to the process, method, product, or device. Naming or numbering the steps in this application does not mean that the steps in the method procedure need to be performed according to a time/logical sequence indicated by names or numbers. An execution sequence of the procedure steps that have been named or numbered may be changed based on technical objectives to be implemented, provided that a same or similar technical effect can be achieved. Division into the units in this application is logical division, and may be other division during actual implementation. For example, a plurality of units may be combined or integrated into another system, or some features may be ignored or not performed. In addition, the displayed or discussed mutual couplings or direct couplings or communication connections may be implemented through some interfaces. Indirect couplings or communication connections between units may be implemented in electrical or other similar forms. This is not limited in this application. In addition, the units or subunits described as separate parts may or may not be physically separate, may or may not be physical units, or may be distributed on a plurality of circuit units. Some or all of the units may be selected based on an actual requirement to achieve the objectives of the solutions of this application.

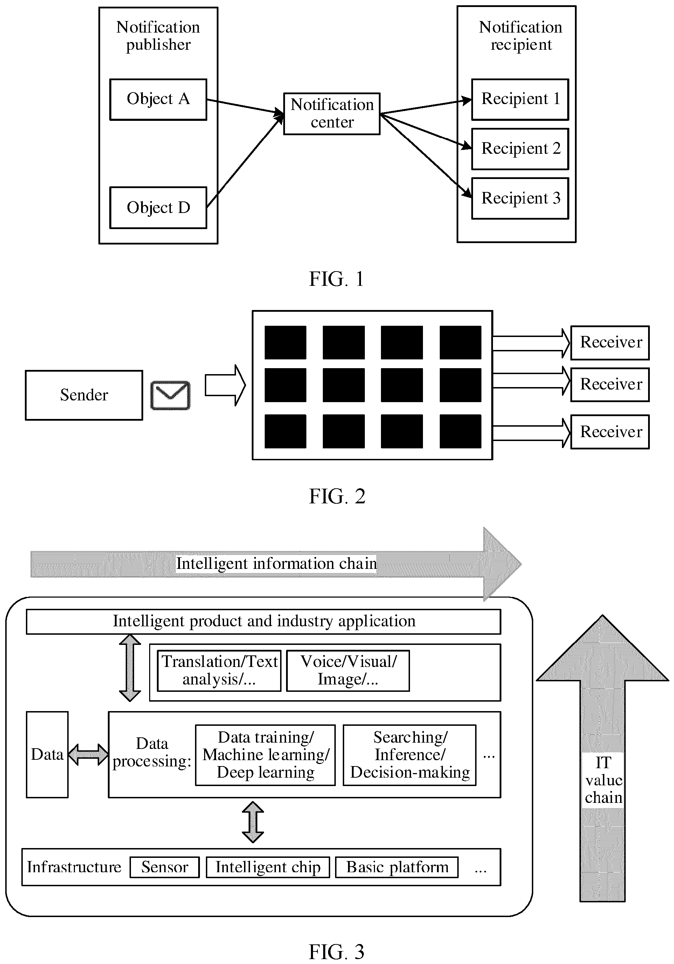

In the telecommunication field, an EMS or an NMS is a system used to manage and control a network, and is widely used. Events such as an abnormal state of a network and a service, a troubleshooting state, and execution and a change of an automatically executed task need to be notified to corresponding engineers in time. In this case, the foregoing requirements may be implemented by using a notification function of a network management and control system. However, in the EMS/NMS, different roles have different perceptions of a same service. Therefore, the different roles need to receive different notification content or need to be notified in different manners. For example, a notification of fault handling timeout needs to be simultaneously sent to a frontline personnel, a maintenance team leader, and a region maintenance representative. Typical content of the notification of fault timeout is: <fault sequence number>, <fault type>, <fault details>, <faulty network element>, <fault root cause>, <fault region>, <importance>, <fault duration>, and <warning type>. The frontline personnel need to be reminded to handle a fault as soon as possible, and fault details and detailed content need to be provided. However, <fault region> does not need to be presented, and a corresponding link does not need to be provided. The frontline maintenance team leader mainly needs to remind a team member to handle the fault as soon as possible, and only needs to provide <fault details>, <faulty network element>, and <fault duration>. The region maintenance is responsible for notifying a fault and does not need to provide details. Meaningful fields are <fault type>, <faulty network element>, <importance>, and <fault duration>. A notification message may not need to be sent to another personnel. Currently, a publish/subscribe mode used by a notification center of the EMS/NMS may be shown in FIG. 1. First, a user subscribes to a corresponding message topic and determines message content, a sending condition, and a sending manner of a corresponding notification message. Then, after the notification message is generated, the notification center sends the notification message to a subscriber. In this solution, for a same message topic, if message content received by different persons needs to be different, different content templates need to be subscribed to. A sender independently generates different messages, and sends a plurality of messages. Consequently, more message queues are occupied. In a possible implementation, the sending manner may be shown in FIG. 2. If a message needs to be sent to three different receivers, the sender needs to generate three different or same notification messages, and then send the three notification messages to the three receivers respectively. In addition, subscription needs to be performed once for each of different roles. Consequently, subscription takes more time, and the subscribed template is prone to an error.

To resolve the foregoing problem, this application provides a message notification method, mainly applied to a message notification apparatus. The message notification apparatus receives a first topic message. Then, the message notification apparatus tailors the first topic message based on a user feature and according to a notification rule to obtain a first notification message. The user feature is a user feature of a first user that subscribes to the first topic message, and the notification rule indicates a correspondence between the user feature and a notification message. Finally, the message notification apparatus sends the first notification message to a first terminal device corresponding to the first user.

For ease of understanding, some terms are correspondingly explained in embodiments of this application.

An EMS (element management system) is element management software that complies with the international telecommunication union-telecommunication standardization sector (International Telecommunication Union-Telecommunication Standardization Sector, ITU-T) standard, and manages one or more network elements of a type. The element management system allows a user to independently manage all features of each network element. A network management system manages communication between network elements.

NMS (network management system): The network management system is a management system that is responsible for network running, management, and maintenance.

A system user is a user that has permission to subscribe to a topic message in this application.

A notified user is a user that has permission to receive a notification message in this application.

The topic message is a definition of messages of various service statuses in network management. For example, in network operation and maintenance, "fault handling timeout" or a "major fault" may be used as a topic message for registration. The topic message of "fault handling timeout" is used as an example for description. The topic message includes the following content: <fault sequence number>, <fault type>, <fault details>, <current state>, <faulty network element>, <fault root cause>, <fault region>, <importance>, <fault duration>, and <warning type>.

Data transmission in the technical solutions in embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a 5G communication system, and a future wireless communication system.

In this application, the first terminal device may be user equipment, and embodiments are described with reference to the user equipment in this application. The user equipment (User Equipment, UE) may also be a terminal device, an access terminal, a subscriber unit, a subscriber station, a mobile station, a remote station, a remote terminal, a mobile device, a user terminal, a terminal, a wireless communication device, a user agent, or a user apparatus. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, or another processing device connected to a wireless modem, a vehicle-mounted device, a wearable device, a terminal device in a 5G network, a terminal device in a future evolved PLMN, or the like.

In this application, the message notification apparatus may be a network device, and embodiments are described with reference to the network device in this application. The network device may be a device configured to communicate with the user equipment, for example, may be a base transceiver station (Base Transceiver Station, BTS) in the GSM system or the CDMA system, may be a NodeB (NodeB, NB) in the WCDMA system, or may be an evolved NodeB (Evolved NodeB, eNB or eNodeB) in the LTE system. Alternatively, the network device may be a relay station, an access point, a vehicle-mounted device, a wearable device, a network side device in the 5G network, or a network device in the future evolved public land mobile network (Public Land Mobile Network, PLMN).

In this application, an artificial intelligence system may be applied. First, an overall working procedure of the artificial intelligence system is described. FIG. 3 is a schematic diagram of a structure of a main framework of artificial intelligence. The following describes the main framework of artificial intelligence from two dimensions: an "intelligent information chain" (a horizontal axis) and an "IT value chain" (a vertical axis). The "intelligent information chain" reflects a series of processes from data obtaining to data processing. For example, the "intelligent information chain" may be a general process of intelligent information perception, intelligent information representation and formation, intelligent inference, intelligent decision-making, and intelligent execution and output. In the process, data undergoes a refinement process of "data-information-knowledge-intelligence". The "IT value chain" is an industrial ecology process from an underlying infrastructure and information (providing and processing technology implementation) to a system, and reflects a value brought by artificial intelligence to the information technology industry.

(1) Infrastructure

The infrastructure provides support of a computing capability for an artificial intelligence system to communicate with the external world and support communication through a basic platform. The infrastructure communicates with the external world through a sensor. The computing capability is provided by an intelligent chip. The intelligent chip may specifically be a hardware acceleration chip, for example, a central processing unit (central processing unit, CPU), an embedded neural-network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA). The basic platform includes assurance and support of a related platform such as a distributed computing framework and a network, and may include cloud storage and computing, an interconnection and interworking network, and the like. For example, the sensor communicates with the external world to obtain data, and the data is provided, for calculation, for an intelligent chip in a distributed computing system provided by the basic platform.

(2) Data

The data at an upper layer of the infrastructure indicates a data source in the field of artificial intelligence. The data relates to graphics, an image, voice, and text, further relates to internet of things data of a conventional device, and includes service data of a conventional system and perception data such as force, displacement, a liquid level, a temperature, and humidity.

(3) Data processing

Data processing usually includes data training, machine learning, deep learning, searching, inference, decision-making, and the like.

During machine learning and deep learning, symbolized and formalized intelligent information modeling, extraction, preprocessing, training, and the like may be performed on the data.

Inference is a process in which a human intelligent inference manner is simulated in a computer or an intelligent system, and machine thinking and problem resolving are performed according to an inference control policy by using formalized information. A typical function is searching and matching.

Decision-making is a process of making decisions after intelligent information is inferred, and usually provides functions such as classification, sorting, and prediction.

(4) General capability

After the data undergoes the foregoing data processing, some general capabilities may be further formed based on a data processing result. For example, the general capability may be an algorithm or a general system, for example, translation, text analysis, computer vision processing, voice recognition, and image recognition.

(5) Intelligent product and industry application

The intelligent product and industry application are a product and application of the artificial intelligence system in various fields, and are encapsulation for an overall solution of artificial intelligence, to productize intelligent information decision-making and implement application. Application fields mainly include an intelligent terminal, intelligent manufacturing, intelligent transportation, an intelligent home, intelligent healthcare, intelligent security protection, autonomous driving, a smart city, and the like.

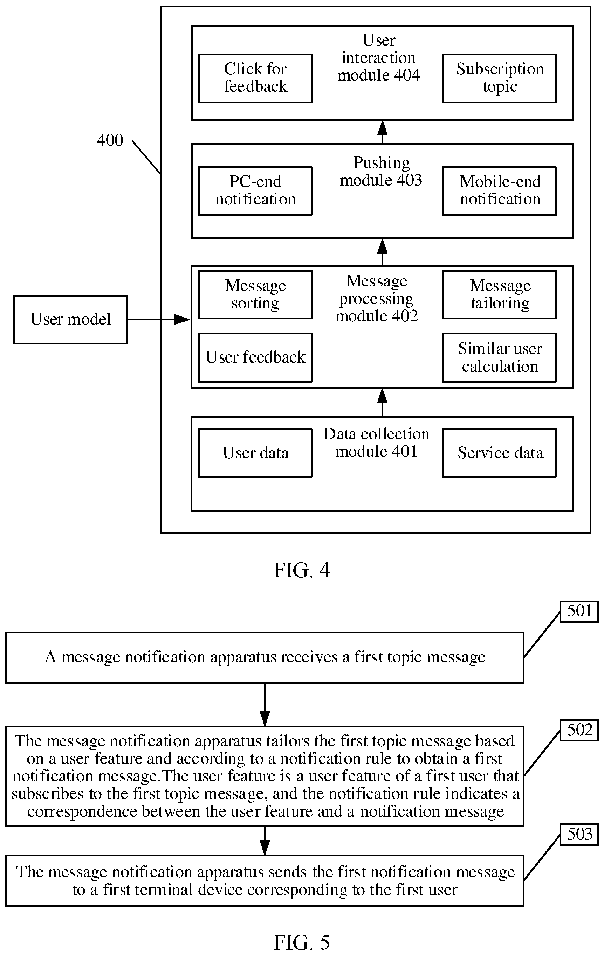

Before the message notification method provided in embodiments of this application is described in detail, the network management system provided in embodiments of this application is first described with reference to FIG. 4. FIG. 4 is a schematic architectural diagram of a network management system. The network management system 400 includes a data collecting module 401, a message processing module 402, a pushing module 403, and a user interaction module 404. The data collecting module 401 is configured to collect information about each network element in a telecommunication network, network service data, and user data of a user on the network management system. The information about each network element may indicate a management region of the user. The network service data indicates whether a fault occurs in the telecommunication network and a specific situation of the fault. The user data includes information such as user permission, a region to which the user belongs, topic message subscription performed by the user by using the user interaction module 404, and a browsing click record. The message processing module 402 is configured to preprocess the collected data, to generate a user model or update the user model. The message processing module is further configured to implement, in a message pushing process, message sorting, message tailoring, and receiving a user feedback sent by the user interaction module 404. The pushing module 403 is configured to select a PC-end notification or a mobile-end notification for a processed notification message. The user interaction module 404 is configured to: present the notification message to the user, and respond to feedback of the user on the notification message, or before receiving the notification message, respond to a subscription operation of the user on the topic message. In the process, the message processing module 402 may alternatively obtain a user model generated by another device, so that only an update process of the user model is implemented. This is not specifically limited herein.

The following describes a specific implementation procedure of the message notification method in embodiments of this application.

Specifically, refer to FIG. 5. An embodiment of the message notification method in embodiments of this application includes the following steps.

501: A message notification apparatus receives a first topic message.

The message notification apparatus receives the first topic message fed back by a service running system or another system. It may be understood that the topic message is a definition of messages of various service statuses in network management. For example, in network operation and maintenance, "fault handling timeout" or a "major fault" may be used as a topic message for registration. The topic message of "fault handling timeout" is used as an example for description. The topic message includes the following content: <fault sequence number>, <fault type>, <fault details>, <current state>, <faulty network element>, <fault root cause>, <fault region>, <importance>, <fault duration>, and <warning type>.

502: The message notification apparatus tailors the first topic message based on a user feature and according to a notification rule to obtain a first notification message. The user feature is a user feature of a first user that subscribes to the first topic message, and the notification rule indicates a correspondence between the user feature and a notification message.

After obtaining the first topic message, the message notification apparatus tailors the first topic message based on the user feature of the first user that subscribes to the first topic message and the notification rule corresponding to the first topic message, to obtain the first notification message corresponding to the first user.

It may be understood that the user feature includes a user role label of the first user and a region in which the first user is located. The user role label of the first user may indicate a task that needs to be executed by the first user in a network management system. For example, if the user role label of the first user is a "region maintenance representative", the first user only needs to know that a fault exists. If the user role label of the first user is a "frontline maintenance personnel", the first user needs to handle the fault as soon as possible based on fault details, a fault cause, and a faulty network element. If the user role label of the first user is a "frontline maintenance team leader", the first user needs to learn of a fault situation and remind a team member (namely, the frontline maintenance personnel) of the first user to handle the fault as soon as possible. If the user role label of the first user is "another personnel", the first user does not need to know fault information. The region in which the first user is located indicates a region in which the first user is located in the network management system. For example, the first user is located in Guangzhou, or the first user is located in Shenzhen.

In this embodiment, the message notification apparatus may obtain the user feature of the first user by using the following solutions.

The message notification apparatus obtains user data of a plurality of users on the network management system. The user data includes user historical data of each user on the network management system. The historical data includes a user attribute, user permission, a region in which the user is located, and feedback information of the user for the notification message. In an example solution, the user data may be shown in Table 1.

**Table 1**

| Operations (historical operation records) | Label (role label) |
| --- | --- |
| "Refresh a quantity of menus of a toolbox", "query for optical power on a network element side", "webssh", "custom sorting", "refresh the menu of the toolbox", "modify a column width", "perform batch synchronization", "store a topology", "RTP: jump to view real-time performance monitoring", "authenticate", and "add a network element access ACL rule" | Maintenance personnel |
| "Enable small topology persistence", "refresh a quantity of menus of a toolbox", "webssh", "manually synchronize a network element", "create a PWE3 service", "perform batch synchronization", "configure Ethernet interface information", "create BFD", and "add a network element access ACL rule" | Maintenance team leader |
| "Modify a remark", "refresh a quantity of menus of a toolbox", "query for optical power on a network element side", "synchronize alarms", "custom sorting", "perform batch synchronization", "store a topology", and "authenticate" | Monitoring personnel |
| ... | ... |

Then, feature extraction is performed on the historical operation record and the role label in Table 1. In an example solution, data obtained after feature extraction may be shown in Table 2.

**Table 2**

| Operations | Label |
|---|---|
| 2, 3, 5, 43, 7, 9, 29, 21, 15 | Maintenance personnel |

It may be understood that Table 2 shows only data obtained after feature extraction of one user, and another user may also perform feature extraction in the foregoing manner. Details are not described herein again.

After feature extraction is performed on the user data, model training is performed based on the foregoing feature data to obtain a final user model. In an example solution, a model training process may be as follows. A target function $f_t(x)$ in a first formula is optimized. The first formula is:

$$
\begin{aligned}
\mathrm{obj}^{(t)} &= \sum_{i=1}^{n} l(y_i, \hat{y}_i^{(t)}) + \sum_{i=1}^{t} \Omega(f_i) \\
&= \sum_{i=1}^{n} l(y_i, \hat{y}_i^{(t-1)} + f_t(x_i)) + \Omega(f_t) + constant
\end{aligned}
,
$$

where $\hat{y}_i^{(t-1)}$ is a prediction value of the first (t-1)th learners about ensemble learning for a sample; $f_t(x)$ is a prediction value of a current learner for the sample; and $\Omega(f_t)$ is a regular term of a tth learner.

After the user model is obtained through training in the foregoing training process, user feature prediction may be performed on another user. For example, after the first user registers with the network management system, the user feature of the first user is predicted by using the user model.

It may be understood that after obtaining the user feature of the first user, the message notification apparatus may further push a subscription template of the topic message to the first user. Therefore, it is convenient for the first user to subscribe to the topic message.

In this embodiment, the message notification apparatus may further obtain the notification rule corresponding to the topic message. In an example solution, the topic message is "fault handling timeout", and a complete message of the topic message may include the following fields: <fault sequence number>, <fault type>, <fault details>, <current state>, <faulty network element>, <fault region>, <importance>, and <fault duration>. Different user roles correspond to different notification rules, and specific results may be shown in Table 3.

**Table 3**

| Topic message | User role | Region in which a user is located | Required attribute | Attribute association link |
|---|---|---|---|---|
| Fault handling timeout | Maintenance team leader | Guangzhou | ["Fault details", "faulty network element", "fault duration", and "fault region"] | [{"attr": "faulty network element","required": true}] |
| Fault handling timeout | Monitoring personnel | Guangzhou | ["Fault details", "faulty network element", and "fault duration"] | [{"attr": "faulty network element", "required": true 1, t "attr": "fault details", "required": true}] |
| Fault handling timeout | Maintenance agent | Guangzhou | ["Fault details", "faulty network element", "fault duration", and "importance"] | |

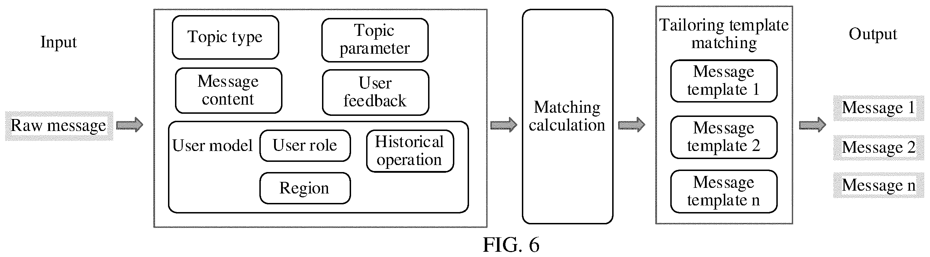

In this embodiment, a process in which the message notification apparatus tailors the topic message based on the user feature of the first user and according to the notification rule may be shown in FIG. 6.

The message notification apparatus obtains user data of the first user, and obtains, based on the user data and the user model, the user role label of the first user and the region in which the first user is located. In addition, the message notification apparatus further obtains related information (for example, a topic type, a topic parameter, and content of the topic message) of the first topic message. The message notification apparatus matches the notification rule corresponding to the topic message with the user role label of the first user and the region in which the first user is located, to obtain a notification message template corresponding to the first user, and tailors the first topic message based on the notification message template to obtain the first notification message. In an example solution, the user feature of the first user may be shown in Table 4.

**Table 4**

| User identity | User name | User role | Region in which a user is located | ConcernAttr |
|---|---|---|---|---|
| 1 | WH_PZ | Maintenance team leader | Guangzhou | |
| 2 | JK_CJ | Monitoring personnel | Guangzhou | |
| 3 | DW_MR | Maintenance agent | Guangzhou | ["Current state"] |
| ... | ... | ... | ... | |

The message notification apparatus obtains the corresponding notification message template after performing cloud computing matching on the user feature of the first user, the notification rule, and related information of the topic message. In an example solution, if the first topic message is "fault processing timeout", the user name of the first user is "DW_MR", and it is obtained, based on Table 4, that the user role of the first user is " maintenance agent" and the region in which the first user is located is "Guangzhou", the notification message template matching the first user is shown in Table 5.

**Table 5**

| Fault handling timeout | Maintenance agent | Guangzhou | ["Fault details", "faulty network element", "fault duration", and "importance"] | |
|---|---|---|---|---|

It is assumed that the topic message is as follows:

"Fault sequence number: 15396688903 (where a link is affiliated in a client, to jump to a corresponding alarm)
Incident type: No light is received in one direction of a port
Incident details: A GigabitEthernet0/3/1 interface on a Shangwan-Shangwanshi Pandatai network element cannot receive light in one direction
Current state: Unacknowledged & uncleared
Faulty network element: ATN950B (where a link is affiliated in a client, to jump to a network element explorer)
Importance: Fault on an aggregation ring
Fault duration: 3 hours and 12 minutes
Notification type: Warning of fault handling timeout
Fault region: Haizhu district".

In this case, a notification message obtained after tailoring is as follows:

"Incident details: The GigabitEthernet0/3/1 interface on the Shangwan-Shangwanshi Pandatai network element cannot receive light in one direction
Current state: Unacknowledged & uncleared
Faulty network element: ATN950B (where the link is affiliated in the client, to jump to the network element explorer)
Importance: Fault on the aggregation ring
Fault duration: 3 hours and 12 minutes".

503: The message notification apparatus sends the first notification message to a first terminal device corresponding to the first user.

After the message notification apparatus obtains the first notification message through processing, the message notification apparatus may choose to send the first notification message to a PC end or a mobile device corresponding to the first user. For example, if the first user subscribes to the first topic message in the message notification apparatus by using a mobile phone number, the message notification apparatus may send the first notification message to a mobile phone of the first user by using the mobile phone number; or if the first user subscribes to the first topic message in the message notification apparatus by using an email, the message notification apparatus may send an email (where the email carries the first notification message) to the first user by using the email address, and the first user may view the email by using the PC end, or view the email by using another mobile device. In an example solution, the terminal corresponding to the first user may further send feedback information to the message notification apparatus, to notify the message notification apparatus whether to send the first notification message to the PC end or the mobile device of the first user. This is not specifically limited herein.

It may be understood that, after the first user receives the first notification message, a feedback message may be further sent to the message notification apparatus based on content of the first notification message and a specific operation of the first user, so that the message notification apparatus can update the user feature of the first user or update the user model based on the feedback message, to push a more accurate notification message to the first user.

In this technical solution, the message notification apparatus tailors the first topic message based on the user feature and according to the notification rule to generate the corresponding notification message. In this way, the topic message needs to be generated only once, and a plurality of notification messages can be generated. Therefore, a same topic message is dynamically filtered, and appropriate content is sent to different users. A plurality of types of templates do not need to be provided for the different users in a case of the same topic message, so that a user subscription error is reduced, and a message buffer size is also reduced.

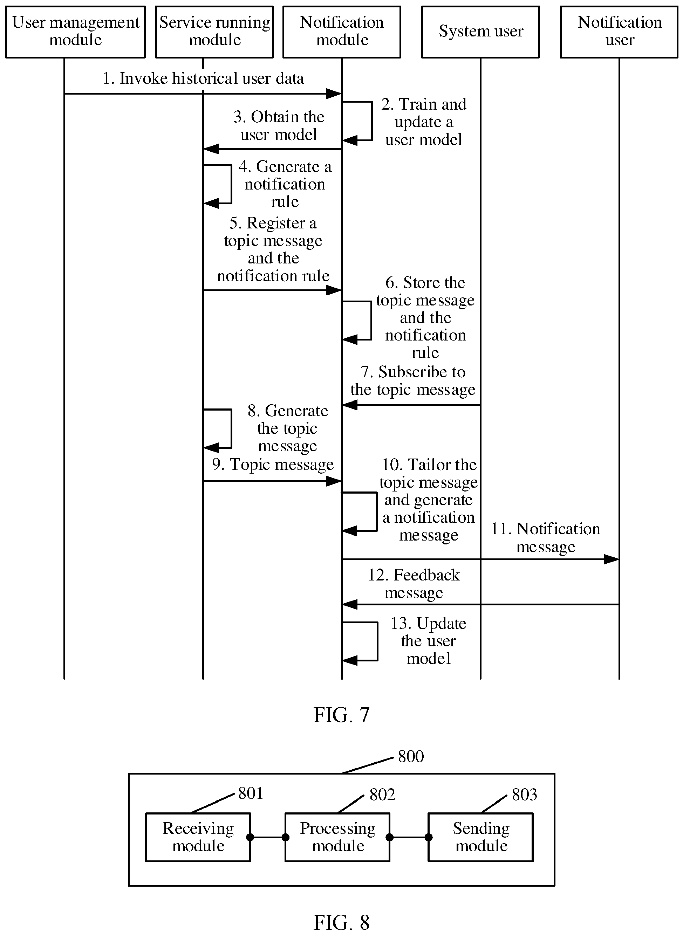

The following describes the message notification method in embodiments of this application by using a specific application scenario. For details, refer to FIG. 7. The message notification method is applied to a network management system including a user management module, a service running module, a notification module, a system user, and a notified user. A specific procedure of the message notification method may be divided into two processes: model processing and model application.

Model processing process:

1. After the network management system is deployed, a notification center invokes historical user data stored in the user management module. In this case, the historical user data includes information such as a user attribute, a region in which a user is located, and a user historical operation.

2. The notification center constructs a network management user model, and trains and updates the user model based on the historical user data.

3. After determining the user model, the service running module obtains the user model from the notification module, and obtains data such as a user role and the region in which the user is located.

4. The service running module generates a notification rule based on a topic message template provided by the notification module. In an example solution, main fields of the notification rule are as follows: {

```
"topic": "fault handling timeout",
        "role": "maintenance team leader",
        "region": "Guangzhou",
        "requiredAttr": [
        "fault details", "faulty network element", and "fault duration"
            ],
        "affiliateLinks": [
                {
        "attr": "faulty network element",
        "required": true
                }
            ]
        }
```

It may be understood that the notification rule is a rule that needs to be followed when the notification center performs topic message tailoring. The notification rule may be as follows. A. The notification rule includes a required attribute (for example, requiredAttr in the foregoing example) and cannot be tailored. B. An attribute association link (for example, affiliateLinks in the foregoing example) is used to determine whether a detailed link corresponding to an attribute needs to be displayed, and different roles have different attention degrees. C. A message topic name (for example, topic in the foregoing example), a user role (for example, role in the foregoing example), and a region (for example, region in the foregoing example) are used to match the rule with a topic message and a user feature.

5. The service running module registers the topic message and the notification rule corresponding to the topic message with the notification module.

6. The notification module stores the topic message registered by the service running module and the notification rule corresponding to the topic message, and presents the topic message to the system user by using a corresponding display device, so that the system user can subscribe to the topic message. After the notification module stores the topic message and the notification rule, the model processing process is completed.

Model application process:

7. The system user subscribes to the topic message from the notification module, and sets a related topic parameter (where the topic parameter includes a related notified person and a trigger condition for the notification module to send a notification message corresponding to the topic message).

8. The service running module obtains service data in a running process, and if the service data indicates that the trigger condition for sending the topic message is met, the service running module generates the topic message. In an example solution, the topic message may be a message of fault handling timeout, and may be specifically as follows:

"Fault sequence number: 15396688903 (where a link is affiliated in a client, to jump to a corresponding alarm)
Incident type: No light is received in one direction of a port
Incident details: A GigabitEthernet0/3/1 interface on a Shangwan-Shangwanshi Pandatai network element cannot receive light in one direction
Current state: Unacknowledged & uncleared
Faulty network element: ATN950B (where a link is affiliated in a client, to jump to a network element explorer)
Importance: Fault on an aggregation ring
Fault duration: 3 hours and 12 minutes
Notification type: Warning of fault handling timeout
Fault region: Haizhu district".

9. The service running module sends the topic message to the notification module.

10. After obtaining the topic message, the notification module tailors the topic message based on the user feature of the user that subscribes to the topic message and the notification rule corresponding to the topic message, to generate a plurality of notification messages including different fields.

11. The notification module notifies the plurality of notification messages to corresponding users.

12. The user feeds back a degree of correlation of the notification message to the notification center by using a user interaction module (for example, a network management interface or a link form). In an example solution, a message fed back by the user includes that the faulty network element does not need a link or needs a current state of the fault.

13. The notification module stores a user feedback and updates the user model. It may be understood that the notification module may also update the user feature simultaneously. In other words, the notification module may separately update a user feature corresponding to the user, or may update a user model of the user.

To better implement the foregoing solutions in embodiments of this application, the following further provides a related device configured to implement the foregoing solutions.

Specifically, refer to FIG. 8. A message notification apparatus 800 in this embodiment of this application includes a receiving module 801, a processing module 802, and a sending module 803. The processing module 802, the sending module 803, and the receiving module 801 are connected through a bus. The message notification apparatus 800 may be the notification module in FIG. 7, or may be the message processing module in FIG. 4, or may be configured as one or more chips. The message notification apparatus 800 may be configured to perform some or all of functions of the message notification apparatus in the foregoing method embodiments.

For example, the receiving module 801 may be configured to perform corresponding data receiving in step 501 in the foregoing method embodiment. For example, the receiving module 801 receives a first topic message. The processing module 802 may be configured to perform step 502 in the foregoing method embodiment. For example, the processing module 802 tailors the first topic message based on a user feature and according to a notification rule to obtain a first notification message. The user feature is a user feature of a first user that subscribes to the first topic message, and the notification rule indicates a correspondence between the user feature and a notification message. The sending module 803 may be configured to perform step 503 in the foregoing method embodiment. For example, the sending module 803 sends the first notification message to a first terminal device corresponding to the first user.

Optionally, the message notification apparatus 800 further includes a storage module. The storage module is coupled to the processing module 802, so that the processing module 802 can execute computer-executable instructions stored in the storage module, to implement functions of the client in the foregoing method embodiments. In an example, the storage module optionally included in the message notification apparatus 800 may be a storage unit in a chip, for example, a register or a cache. Alternatively, the storage module may be a storage unit located outside the chip, for example, a ROM, another type of static storage device that can store static information and instructions, or a RAM.

It should be understood that a procedure performed by modules of the message notification apparatus in the embodiment corresponding to FIG. 8 is similar to a procedure performed by the message notification apparatus in the corresponding method embodiments in FIG. 4 to FIG. 7. Details are not described herein again.

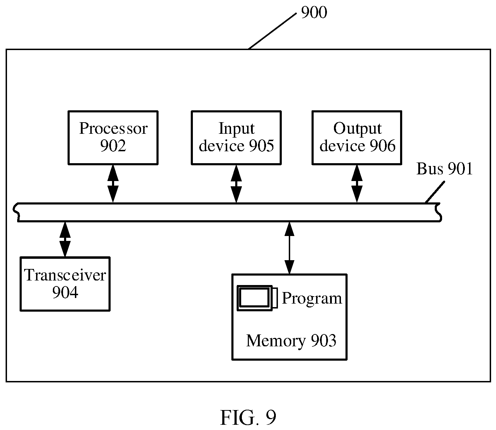

FIG. 9 is a schematic diagram of a possible structure of a message notification apparatus 900 according to the foregoing embodiment. The message notification apparatus 900 may include a processor 902, a computer-readable storage medium/memory 903, a transceiver 904, an input device 905, an output device 906, and a bus 901. The processor, the transceiver, the computer-readable storage medium, and the like are connected through the bus. A specific connection medium between the foregoing components is not limited in this embodiment of this application.

In an example, the transceiver 904 receives a first topic message.

The processor 902 tailors the first topic message based on a user feature and according to a notification rule to obtain a first notification message. The user feature is a user feature of a first user that subscribes to the first topic message, and the notification rule indicates a correspondence between the user feature and a notification message.

The transceiver 904 sends the first notification message to a first terminal device corresponding to the first user.

In another example, the processor 902 may run an operating system to control a function between each device and each component. The transceiver 904 may include a baseband circuit and a radio frequency circuit. For example, the transceiver 904 may process the first notification message by using the baseband circuit and the radio frequency circuit, and then send processed first notification message to the first terminal device.

The transceiver 904 and the processor 902 may implement a corresponding step in any one of the embodiments in FIG. 4 to FIG. 7. Details are not described herein again.

It may be understood that FIG. 9 only shows a simplified design of the message notification apparatus. During actual application, the message notification apparatus may include any quantity of transceivers, processors, memories, and the like, and all message notification apparatuses that can implement this application shall fall within the protection scope of this application.

The processor 902 in the message notification apparatus 900 may be a general-purpose processor, for example, a CPU, a network processor (network processor, NP), or a microprocessor, or may be an ASIC, or one or more integrated circuits configured to control program execution of the solutions in this application. Alternatively, the processor 902 may be a digital signal processor (digital signal processor, DSP), a field programmable gate array (field programmable gate array, FPGA) or another programmable logic device, a discrete gate or a transistor logic device, or a discrete hardware component. Alternatively, a controller/the processor may be a combination of processors implementing a computing function, for example, a combination of one or more microprocessors, or a combination of the DSP and the microprocessor. The processor usually performs logical and arithmetic operations based on program instructions stored in the memory.

The bus 901 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 9, but this does not mean that there is only one bus or only one type of bus.

The computer-readable storage medium/memory 903 may further store an operating system and another application program. Specifically, the program may include program code, and the program code includes computer operation instructions. More specifically, the memory may be a ROM, another type of static storage device that can store static information and instructions, a RAM, another type of dynamic storage device that can store information and instructions, a magnetic disk memory, or the like. The memory 903 may be a combination of the foregoing memory types. In addition, the computer-readable storage medium/memory may be located in the processor, or may be located outside the processor, or distributed in a plurality of entities including the processor or a processing circuit. The computer-readable storage medium/memory may be specifically embodied in a computer program product. For example, the computer program product may include a computer-readable medium in a packaging material.

Alternatively, an embodiment of this application further provides a universal processing system. For example, the universal processing system is usually referred to as a chip. The universal processing system includes one or more microprocessors that provide a processor function, and an external memory that provides at least some of storage media. All these components are connected to another supporting circuit through an external bus architecture. When the instructions stored in the memory are executed by the processor, the processor is enabled to perform some or all of the steps of the message notification apparatus in the embodiments in FIG. 4 to FIG. 7, and/or another process of the technology described in this application.

An embodiment of this application further provides a computer program product. When the computer program product runs on a computer, the computer is enabled to perform the steps performed by the message notification apparatus in the methods described in the embodiments shown in FIG. 4 to FIG. 7.

An embodiment of this application further provides a computer-readable storage medium. The computer-readable storage medium stores a program used for signal processing. When the program is run on a computer, the computer is enabled to perform the steps performed by the message notification apparatus in the methods described in the embodiments shown in FIG. 4 to FIG. 7.

The message notification apparatus provided in the embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in the storage unit, to enable the chip to perform the message notification method described in the embodiments shown in FIG. 4 to FIG. 7. Optionally, the storage unit may be a storage unit in the chip, for example, a register or a buffer. The storage unit may alternatively be a storage unit that is in a wireless access device and that is located outside the chip, for example, a read-only memory (read-only memory, ROM) or another type of static storage device that can store static information and instructions, or a random access memory (random access memory, RAM).

An embodiment of this application further provides a network management system. The message notification apparatuses in FIG. 8 and FIG. 9 are deployed in the network management system.

Method or algorithm steps described in combination with the content disclosed in this application may be implemented by hardware, or may be implemented by a processor by executing software instructions. The software instructions may include a corresponding software module. The software module may be located in a RAM memory, a flash memory, a ROM memory, an EPROM memory, an EEPROM memory, a register, a hard disk, a removable hard disk, a CD-ROM, or a storage medium of any other form well-known in the art. For example, the storage medium is coupled to the processor, so that the processor can read information from the storage medium and write information into the storage medium. Certainly, the storage medium may alternatively be a component of the processor. The processor and the storage medium may be located in the ASIC. In addition, the ASIC may be located in a terminal. Certainly, the processor and the storage medium may alternatively exist in the message notification apparatus as discrete components.

A person skilled in the art may clearly understand that, for the purpose of convenient and brief description, for a detailed working process of the foregoing described system, apparatus, and unit, refer to a corresponding process in the foregoing method embodiments. Details are not described herein again.

In the several embodiments provided in this application, it should be understood that, the disclosed system, apparatus, and method may be implemented in another manner. For example, the described apparatus embodiment is merely an example. For example, division into the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may or may not be physical units, that is, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The storage medium includes any medium, such as a USB flash drive, a removable hard disk, a read-only memory (ROM, Read-Only Memory), a random access memory (RAM, Random Access Memory), a magnetic disk, or an optical disc, that can store program code.

**Claims**

1.    A message notification method, comprising:

receiving a first topic message;

tailoring the first topic message based on a user feature and according to a notification rule to obtain a first notification message, wherein the user feature is a user feature of a first user that subscribes to the first topic message, and the notification rule indicates a correspondence between the user feature and a notification message; and

sending the first notification message to a first terminal device corresponding to the first user.

2. The method according to claim 1, wherein the user feature comprises a user role label of the first user and a region in which the first user is located.

3. The method according to claim 2, wherein the tailoring the first topic message based on a user feature and according to a notification rule to obtain a first notification message comprises:

obtaining the user role label of the first user and the region in which the first user is located;

matching the notification rule with the user role label of the first user and the region in which the first user is located to obtain a notification message template corresponding to the first user; and

tailoring the first topic message based on the notification message template to obtain the first notification message.

4. The method according to any one of claims 1 to 3, wherein the method further comprises:

obtaining user data;

generating a user model based on the user data; and

obtaining the user feature of the first user based on the user model.

5. The method according to claim 4, wherein the user data comprises a user name, a region in which a user is located, a user historical operation, a user attribute, and user permission.

6. The method according to claim 4, wherein the method further comprises:

recommending a subscription template of a topic message based on the user feature of the first user, wherein the subscription template comprises a corresponding parameter of the topic message.

7. The method according to any one of claims 1 to 6, wherein the first terminal device comprises a personal computer PC or a mobile device.

8. The method according to any one of claims 4 to 7, wherein the method further comprises:

receiving feedback information fed back by the first terminal; and

updating the user model based on the feedback information.

9. A message notification method, comprising:

sending, by a service running system or another system, a first topic message to a message notification apparatus;

receiving, by the message notification apparatus, the first topic message from the service running system or the another system;

tailoring, by the message notification apparatus, the first topic message based on a user feature and according to a notification rule to obtain a first notification message, wherein the user feature is a user feature of a first user that subscribes to the first topic message, and the notification rule indicates a correspondence between the user feature and a notification message; and

sending, by the message notification apparatus, the first notification message to a first terminal device corresponding to the first user.

10. The method according to claim 9, wherein the user feature comprises a user role label of the first user and a region in which the first user is located.

11. The method according to claim 10, wherein the tailoring, by the message notification apparatus, the first topic message based on a user feature and according to a notification rule to obtain a first notification message comprises:

obtaining, by the message notification apparatus, the user role label of the first user and the region in which the first user is located;

matching, by the message notification apparatus, the notification rule with the user role label of the first user and the region in which the first user is located to obtain a notification message template corresponding to the first user; and

tailoring, by the message notification apparatus, the first topic message based on the notification message template to obtain the first notification message.

12. The method according to any one of claims 9 to 11, wherein the method further comprises:

sending, by a terminal device, user data to the message notification apparatus;
obtaining, by the message notification apparatus, the user data from the terminal device;
generating, by the message notification apparatus, a user model based on the user data; and
obtaining, by the message notification apparatus, the user feature of the first user based on the user model.

13. The method according to claim 12, wherein the user data comprises a user name, a region in which a user is located, a user historical operation, a user attribute, and user permission.

14. The method according to claim 13, wherein the method further comprises:
recommending, by the message notification apparatus, a subscription template of a topic message to the first terminal based on the user feature of the first user, wherein the subscription template comprises a corresponding parameter of the topic message.

15. The method according to any one of claims 9 to 14, wherein the first terminal device comprises a personal computer PC or a mobile device.

16. The method according to any one of claims 12 to 15, wherein the method further comprises:

sending, by the first terminal, feedback information to the message notification apparatus;
receiving, by the message notification apparatus, feedback information fed back by the first terminal; and
updating, by the message notification apparatus, the user model based on the feedback information.

17. A message notification apparatus, comprising:

a receiving module, configured to receive a first topic message;
a processing module, configured to tailor the first topic message based on a user feature and according to a notification rule to obtain a first notification message, wherein the user feature is a user feature of a first user that subscribes to the first topic message, and the notification rule indicates a correspondence between the user feature and a notification message; and
a sending module, configured to send the first notification message to a first terminal device corresponding to the first user.

18. The apparatus according to claim 17, wherein the user feature comprises a user role label of the first user and a region in which the first user is located.

19. The apparatus according to claim 18, wherein the processing module is specifically configured to: obtain the user role label of the first user and the region in which the first user is located; match the notification rule with the user role label of the first user and the region in which the first user is located to obtain a notification message template corresponding to the first user; and tailor the first topic message based on the notification message template to obtain the first notification message.

20. The apparatus according to any one of claims 17 to 19, wherein the processing module is further configured to: obtain user data; generate a user model based on the user data; and obtain the user feature of the first user based on the user model.

21. The apparatus according to claim 19, wherein the user data comprises a user name, a region in which a user is located, a user historical operation, a user attribute, and user permission.

**22.** The apparatus according to claim 19, wherein the processing module is further configured to recommend a subscription template of a topic message based on the user feature of the first user, wherein the subscription template comprises a corresponding parameter of the topic message.

**23.** The apparatus according to any one of claims 17 to 22, wherein the first terminal device comprises a personal computer PC or a mobile device.

**24.** The apparatus according to any one of claims 17 to 23, wherein the receiving module is further configured to receive feedback information fed back by the first terminal; and

the processing module is further configured to update the user model based on the feedback information.

**25.** A computer program product, wherein when a computer program is run on a computer, the computer is enabled to perform the method according to any one of claims 1 to 8.

**26.** A computer-readable storage medium, storing a program, wherein when the program is run on a computer, the computer is enabled to perform the method according to any one of claims 1 to 8.

**27.** A network management system, wherein the network management system comprises the message notification apparatus according to any one of claims 17 to 24.

Notification publisher

Object A

Object D

Notification center

Notification recipient

Recipient 1

Recipient 2

Recipient 3

FIG. 1

Sender

Receiver

Receiver

Receiver

FIG. 2

Intelligent information chain

Intelligent product and industry application

Translation/Text analysis/...

Voice/Visual/ Image/...

Data

Data processing:

Data training/ Machine learning/ Deep learning

Searching/ Inference/ Decision-making

...

Infrastructure | Sensor | Intelligent chip | Basic platform | ...

IT value chain

FIG. 3

400

**User interaction module 404**

| Click for feedback | | Subscription topic |

**Pushing module 403**

| PC-end notification | | Mobile-end notification |

User model →

**Message processing module 402**

| Message sorting | | Message tailoring |
| User feedback | | Similar user calculation |

**Data collection module 401**

| User data | | Service data |

FIG. 4

501

A message notification apparatus receives a first topic message

502

The message notification apparatus tailors the first topic message based on a user feature and according to a notification rule to obtain a first notification message. The user feature is a user feature of a first user that subscribes to the first topic message, and the notification rule indicates a correspondence between the user feature and a notification message

503

The message notification apparatus sends the first notification message to a first terminal device corresponding to the first user

FIG. 5

Input

Raw message

| Topic type | | Topic parameter |
| Message content | | User feedback |

User model | User role | Historical operation |
| Region |

Matching calculation

Tailoring template matching
Message template 1
Message template 2
Message template n

Output

Message 1

Message 2

Message n

FIG. 6

| User management module | Service running module | Notification module | System user | Notification user |
|---|---|---|---|---|

1. Invoke historical user data

2. Train and update a user model

3. Obtain the user model

4. Generate a notification rule

5. Register a topic message and the notification rule

6. Store the topic message and the notification rule

7. Subscribe to the topic message

8. Generate the topic message

9. Topic message

10. Tailor the topic message and generate a notification message

11. Notification message

12. Feedback message

13. Update the user model

FIG. 7

800

801
Receiving module

802
Processing module

803
Sending module

FIG. 8

900

| Processor 902 | Input device 905 | Output device 906 |

Bus 901

Transceiver 904

Program

Memory 903

FIG. 9

## INTERNATIONAL SEARCH REPORT

| International application No. |
|---|
| **PCT/CN2022/140604** |

| A. | CLASSIFICATION OF SUBJECT MATTER |
|---|---|

H04L 41/06(2022.01)i

According to International Patent Classification (IPC) or to both national classification and IPC

| B. | FIELDS SEARCHED |
|---|---|

Minimum documentation searched (classification system followed by classification symbols)

IPC:H04L,G06F

Documentation searched other than minimum documentation to the extent that such documents are included in the fields searched

Electronic data base consulted during the international search (name of data base and, where practicable, search terms used)

CNPAT, WPI, EPODOC, CNKI: 消息, 订阅, 通知, 主题, 用户特征, 角色, 规则, 裁剪, 剪裁, 剔除, 字段, message, subscription, notification, topic, user feature, role, rule, cut, cull, field

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111181976 A (SHENZHEN INTELLIFUSION TECHNOLOGIES CO., LTD.) 19 May 2020 (2020-05-19)<br>  description, paragraphs [0005]-[0021] and [0039]-[0084] | 1-27 |
| A | CN 109412850 A (HEFEI BRANCH OF NEW H3C TECHNOLOGIES CO., LTD.) 01 March 2019 (2019-03-01)<br>  entire document | 1-27 |
| A | CN 112311825 A (ZHEJIANG UNIVIEW TECHNOLOGIES CO., LTD.) 02 February 2021 (2021-02-02)<br>  entire document | 1-27 |
| A | US 2012215856 A1 (INTERNATIONAL BUSINESS MACHINES CORP.) 23 August 2012 (2012-08-23)<br>  entire document | 1-27 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 February 2023** | **20 February 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT
### Information on patent family members

International application No.

**PCT/CN2022/140604**

| Patent document cited in search report | | | Publication date (day/month/year) | Patent family member(s) | | | Publication date (day/month/year) |
|---|---|---|---|---|---|---|---|
| CN | 111181976 | A | 19 May 2020 | WO | 2021135255 | A1 | 08 July 2021 |
| CN | 109412850 | A | 01 March 2019 | None | | | |
| CN | 112311825 | A | 02 February 2021 | None | | | |
| US | 2012215856 | A1 | 23 August 2012 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111584481